# EUROPEAN PATENT SPECIFICATION

(11) **EP 1 513 980 B1**
(45) Date of publication and mention of the grant of the patent: **23.03.2011**
(21) Application number: 03730401.1
(22) Date of filing: 05.06.2003
(51) Int. Cl.: D06P 3/54, D06P 3/52, D06P 1/44, D06P 3/82, D06P 1/16, C09B 67/00

(54) **DYEING POLYESTER TEXTILE MATERIALS**
FÄRBEN VON POLYESTER-TEXTILMATERIALIEN
TEINTURE DE MATIERES TEXTILES EN POLYESTER

(30) Priority: 05.06.2002 GB 0212691
(43) Date of publication of application: 16.03.2005
(73) Proprietor: Clariant Finance (BVI) Limited, Road Town, Tortola (VG)
(72) Inventor: SIEBER, Helmut, 79618 Rheinfelden (DE)
(74) Representative: Jacobi, Carola
(86) International application number: PCT/IB2003/002140
(87) International publication number: WO 2003/104545

(56) References cited:
- WO-A-02/057537
- DE-B- 1 086 832
- GB-A- 883 377
- "Colour Index international" 1987 , THE SOCIETY OF DYERS AND COLOURISTS , THIRD EDITION XP002260810 8 page 8216 -page 8217

## Description

The invention relates to the use of a transition metal coordination compound for dyeing a fibre fabric or a fibre material comprising polyester fibres for impoving the light fastness of the dyeings.

The problem to be solved of the present invention is to improve the fastness to light of dyed polyester material without the need of using modified polyester fiber material.

It has been found, that the use of mixtures comprising a transition metal coordination compound according to formula (I) as hereinafter described for dyeing a fibre fabric or a fibre material comprising polyester fibres improves the light fastness of the dyeings.

A further aspect of the present invention relates to the use of at least one transition metal coordination compound according to formula (I) for improving the light fastness of dyed polyester material.

By preference, the transition metal cordination compound comprises Ni, Co, Cr or Cu (Nickel, Cobalt, Chromium or Copper). The most preferred transition metal is Nickel (Ni).

Therefore this invention relates to the use of at least one transition metal coordination compound of formula (I) for improving the light fastness of dyed polyester material. Preferred transition metal coordination compounds comprise Ni, Co, Cr or Cu (Nickel, Cobalt, Chromium or Copper); more preferred transition metal coordination compounds comprise Nickel (Ni). This invention relates to mixtures of at least one transition metal coordination compound of formula (I) and at least one additional disperse dye.

The preferred transition metal coordination compounds are not water soluble e.g are not acid dyes or direct dyes or basic dyes, which means the preferred transition metal coordination compounds are dispers dyes. Disperse dyes are colorants with low water solubility that, in their disperse colloidal form, are suitable for dyeing and printing hydrophobic fibers and fabrics.

The transition metal coordination compounds used in the invention have the formula (I) 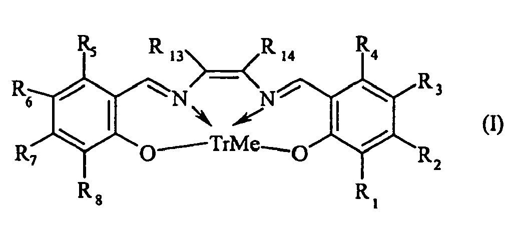 wherein
TrMe signifies a transition metal and R₁, to R₈ independently from each other signify H, halogen, -NO₂, -CN, -OH, -COOH, -CH₃, -NH₂ or NHCH₃ and R₁₃ or R₁₄ independently from each other signify H, halogen or -CN, or R₁₃ and R₁₄ form together a ring which is by preference a six membered ring and which may be unsubstituted or may be substituted by halogen, -NO₂, -CN, -OH, -COOH, -CH₃, -NH₂ or NHCH₃.

Preferably, transition metal coordination compounds or mixtures of transition metal coordination compounds are used wherein R₁ to R₈ independently from each other signify H, -Cl, -COOH, or -CN.

In a preferred embodiment the transition metal TrMe is selected from Nickel, Cobalt, Chromium or Copper.

In a more preferred embodiment the transition metal TrMe is Nickel.

For example, the mixture comprises at least one of the transition metal coordination compound according to formula (II) or formula (III) 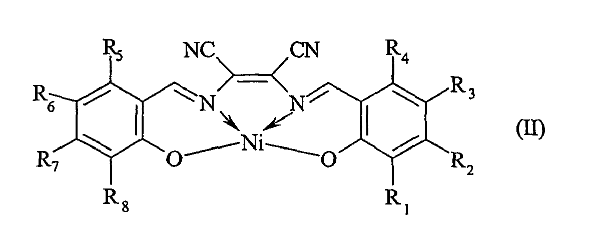 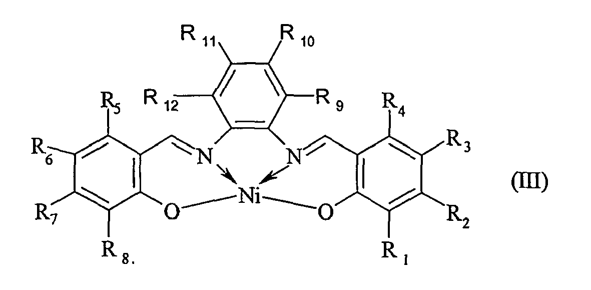 wherein R₁ to R₁₂ independently from each other signify H, halogen, -NO₂, -CN, -OH, -COOH, -CH₃, -NH₂ or NHCH₃.

Preferably, transition metal coordination compounds or mixtures of transition metal coordination compounds are used wherein R₁ - R₁₂ independently from each other signify H, -Cl, -COOH, or -CN.

The transition metal coordination compound of formula (II), wherein all R₁ - R₈ are H, is known as C.I. Solvent Brown 53 (Polysynthren^{®} Braun R, Polysynthren^{®} is a registered Trademark of CLARIANT) or a transition metal coordination compound of formula (III) wherein all R₁ - R₁₂ are H, which is known as C.I. Pigment Orange 70 (Polysynthren^{®} Braun 3RL, Polysynthren^{®} is a registered Trademark of CLARIANT).

Therefor and the most preferred transition metal coordination compound is either a compound according to formula (II) or formula (III)

The transition metal coordination compounds may be used together with other dyes suitable for dyeing polyester materials. Usually polyester materials are dyed using disperse dyes.

In a embodiment the transition metal coordination compounds or the pigments are used in mixtures together with disperse dyes.

In the preferred embodiment the transition metal coordination compounds comprises Ni, Co, Cr or Cu (Nickel, Cobalt, Chromium or Copper) and are used in mixtures together with disperse dyes. The most preferred transition metal is Nickel (Ni).

In a more preferred embodiment the transition metal coordination compounds or the pigments have the formula (I) and are used in mixtures together with disperse dyes.

In the most preferred embodiment the transition metal coordination compounds or the pigments have the formula (II) or formula (III) and are used in mixtures together with disperse dyes. The most preferred transition metal coordination compounds is either C.I. Solvent Brown 53 or C.I. Pigment Orange 70.

Preferred disperse dyes are for example at least one of the following disperse dyes: C.I. Disperse Yellow 42, C.I. Disperse Yellow 72, C.I. Disperse Yellow 86, C.I. Disperse Yellow 54, C.I. Disperse Yellow 64, C.I. Solvent Yellow 163, C.I. Disperse Red 60, C.I. Disperse Red 86, C.I. Disperse Red 91, C.I. Disperse Red 167, C.I. Disperse Red 167.1, C.I. Disperse Red 202, C.I. Disperse Red 302, C.I. Disperse Red 273, C.I. Disperse Red 279, C.I. Disperse Red 271, C.I. Solvent Red 135, C.I. Disperse Violet 27, C.I. Disperse Violet 57, C.I. Disperse Blue 56, C.I. Disperse Blue 77, C.I. Disperse Blue 54, C.I. Disperse Blue 27, C.I. Disperse Blue 55, C.I. Disperse Blue 60, C.I. Disperse Blue 87, C.I. Disperse Orange 30, C.I. Disperse Orange 41, C.I. Disperse Orange 29, structures according to formula (IV) 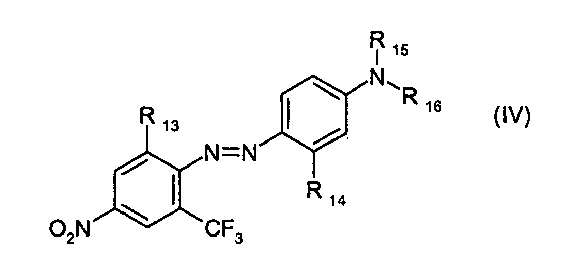 wherein
- R₁₃: signifies -Br, -Cl, or -CN;
- R₁₄: sigifies -H, -CH₃, -NHCOCH₃;
- R₁₅: signifies a unsubstituted ethyl group or ethyl group which is substituded by -CN, -acyloxy;
- R₁₆: sigifies a unsubstituted ethyl group or ethyl group which is substituded by -CN, -acyloxy;
or mixtures thereof.

Dyes according to the formula (IV) are known for example from EP1085055 A1, CH468444, US2941992, US3407189, FR1291988, US2891942, DE2364205 and JP49030417 A. Preferred examples are shown in EP1085055 A1 on page 2, line 37 to page 4, line 23 and in the examples 1 to 20 of EP1085055 A1.

A further aspect of the present invention is a mixture of at least one transition metal coordination compound of formula (I) at least one disperse dye as claimed in claim 7. By preference the at least one transition metal coordination compound comprises Ni, Co, Cr or Cu (Nickel, Cobalt, Chromium or Copper). The most preferred transition metal is Nickel (Ni).

The preferred transition metal coordination compounds in the mixtures according to the invention are not water soluble e.g are not acid dyes or direct dyes or basic dyes, which means the preferred transition metal coordination compounds are disperse dyes

In the most preferred embodiment in transition metal coordination compound the transition metal is Nickel. In a more preferred embodiment the Ni-compound is of formula (II) or formula (III).

The disperse dyes preferably used in the mixtures according to the invention are at least one of the following disperse dyes: C.I. Disperse Yellow 42, C.I. Disperse Yellow 72, C.I. Disperse Yellow 86, C.I. Disperse Yellow 54, C.I. Disperse Yellow 64, C.I. Solvent Yellow 163, C.I. Disperse Red 60, C.I. Disperse Red 86, C.I. Disperse Red 91, C.I. Disperse Red 167, C.I. Disperse Red 167.1, C.I. Disperse Red 202, C.I. Disperse Red 302, C.I. Disperse Red 273, C.I. Disperse Red 279, C.I. Disperse Red 271, C.I. Solvent Red 135, C.I. Disperse Violet 27, C.I. Disperse Violet 57, C.I. Disperse Blue 56, C.I. Disperse Blue 77, C.I. Disperse Blue 54, C.I. Disperse Blue 27, C.I. Disperse Blue 55, C.I. Disperse Blue 60, C.I. Disperse Blue 87, C.I. Disperse Orange 30, C.I. Disperse Orange 41, C.I. Disperse Orange 29, structures according to formula (IV) 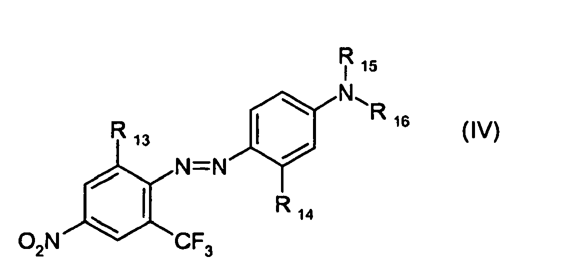 wherein
- R₁₃: signifies -Br, -Cl, or -CN;
- R₁₄: sigifies -H, -CH₃, -NHCOCH₃;
- R₁₅: signifies a unsubstituted ethyl group or ethyl group which is substituded by -CN, -acyloxy;
- R₁₆: sigifies a unsubstituted ethyl group or ethyl group which is substituded by -CN, -acyloxy;
or mixtures thereof.

The transition metal coordination compounds can be used according to the invention in any effective ratio with disperse dyes. For example the mixture comprises 2% to 99% of the transition metal coordination compounds, preferably from 50% to 97%.

The transition metal coordination compounds may be used according to the invention together with any UV-absorber. Preferred UV-absorbers are derivatives of 2-hydroxybenzophenones, derivatives of 2-hydroxyphenylbenzotriazoles, derivatives of oxalanilides, derivatives of 2-hydroxyphenyltriazines, derivatives of cinnamates, derivatives of salicylates, derivatives of benzoxazine-4-ones, derivatives of 4,6-diacyl-resorcinoles, or derivatives of formamidines. More preferred UV-absorbers have the formula

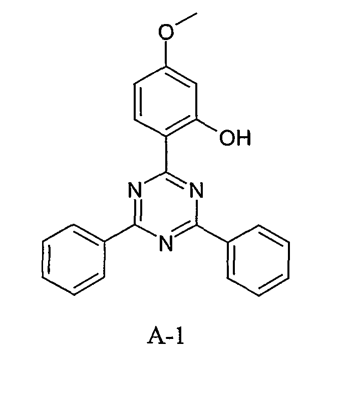

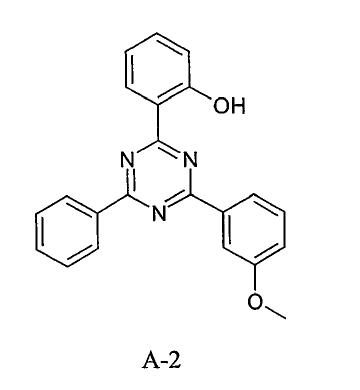

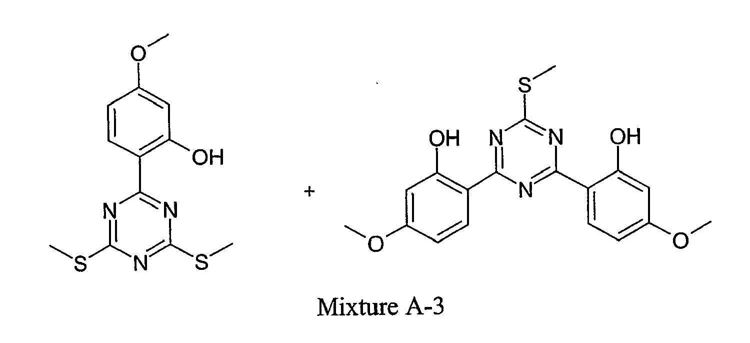

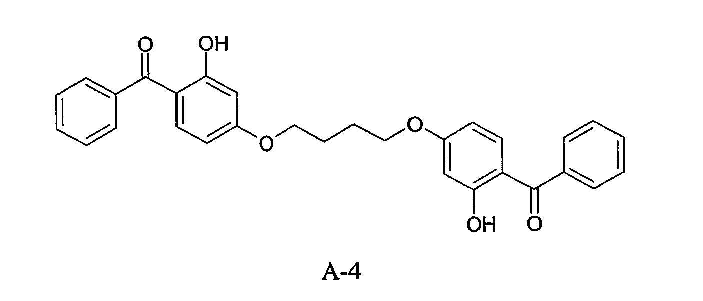

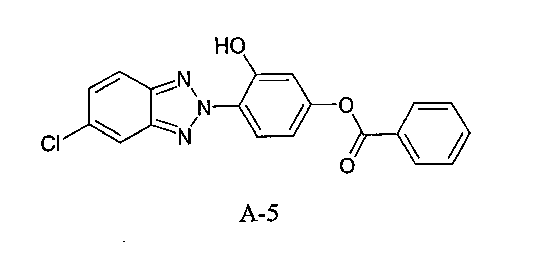

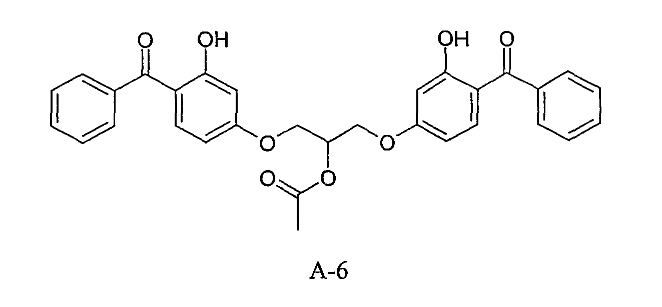

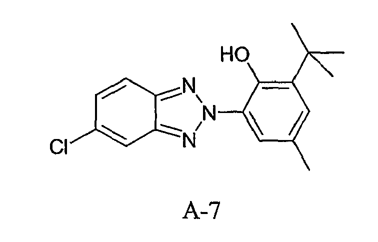

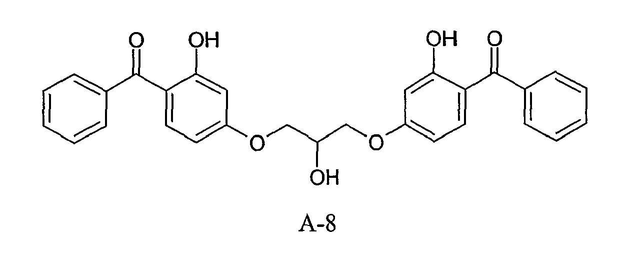

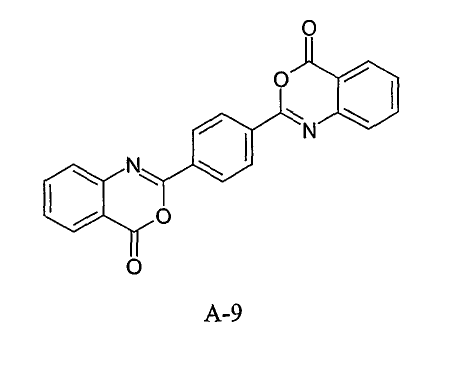

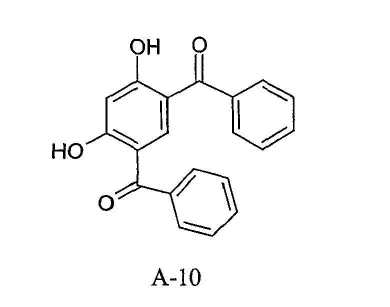

The pigments of formula (I) are used for dyeing and printing semisynthetic and, preferably, synthetic hydrophobic fiber materials, especially textile materials. The pigments of formula (II) or formula (III) as well as mixtures comprising the pigments of formula (II) or formula (III) are used for dyeing and printing semisynthetic and, preferably, synthetic hydrophobic fiber materials, especially textile materials. Textile materials consisting of blended fabrics containing such semisynthetic hydrophobic fiber materials can also be dyed or printed by means of the dyes of this invention.

Suitable semisynthetic textile materials are mainly cellulose-2½ acetate, cellulose triacetate polyamides and high molecular weight polyesters as well as mixtures thereof with cellulose.

Synthetic hydrophobic textile materials consist mainly of linear aromatic polyester, for example of those consisting of terephthalic acid and glycols, in particular ethylene glycol or condensate of terephthalic acid and 1,4-bis(hydroxymethyl)cyclohexane; of polycarbonates, e.g. those consisting of alpha,alpha-dimethyl-4,4'-dihydroxydiphenylmethane and phosgene, and of fibers based on polyvinyl chloride and polyamide.

The hydrophobic synthetic materials can be in the form of sheet-like or thread-like structures, and can be processed, for example, to yarns or woven, knitted or looped textile fabrics. The mixtures according to the invention are also suitable for dyeing hydrophobic synthetic material in the form of micro fibers.

Dyeing can be carried out by known methods. Additives usual for dyeing with disperse dyes can be added to the bath (e.g. dispersing agents, preferably anionic dispersants, such as aromatic sulfonic acid/formaldehyde condensates, sulfonated creosol oil/- formaldehyde condensates, lignin sulfonates or copolymers of acrylic acid derivates, preferably aromatic sulfonic acid/formaldehyde condensate or lignin sulfonated, or nonionic dispersants based on polyalkylene oxides obtainable, for examples, by polyaddition reaction from ethylene oxide or propylene oxide. Further suitable dispersants are listed in US 4,895,981 or US 5,910,624.

The transition metal coordination compounds according to formula (I) are suitable for dyeing by the thermosol process, for the exhaust and continuos process and for printing as for modem imaging processes, e.g. thermo-transfer printing or ink-jet printing.

Preferably dyeing with the disperse dyes (e.g. for the polyester fibres of a mixed fibre substrate) is performed at pH of 3-9 more preferably 4-6, most preferably 4-5.5 and at a temperature of 125 DEG-135 DEG C. for 15-45 minutes.

After dyeing in a process according to the invention, conventional washing and drying steps may be employed.

Fiber materials and textile materials can be dyed with a dye mixture comprising a transition metal coordination compound according to formula (I).

The textile material dyed using a mixture comprising a transition metal coordination compound and a disperse dye provides dyed textile materials having good light fastness. Since the the textiles have light fasnesses under warm and humid conditions like they occur in closed cars or motor vehicles, this textile material dyed according to the invention is suitable for example as upholstery material in car manufacturing or any other application wherer improved light fastness is desired for example for an article of clothing or of a sun blind or textiles for textiles for out door furnitures.

### APPLICATION EXAMPLE

17.5 parts of the pigment and disperse dye mixture (96% C.I. Solvent Brown 53 and 4% C.I. Disperse Red 86; this is the dye mixture from example 23a of table 1) with 32.5 parts of a commercial dispersing agent based on lignin sulphonates, and pulverized to a powder. 1.2 parts of this dye preparation are added to 2000 parts of demineralized water of 70°C, which contains 40 parts of ammonium sulfate; the pH value of the dye bath is set at 5 with 85% formic acid. 100 parts of washed polyester fiber fabric are placed in this dye bath, the container is closed, heated to 130°C over the course of 20 minutes, and dyeing continues for a further 60 minutes at this temperature. After cooling, the polyester fiber fabric is removed from the dye bath, rinsed, soaped and cleansed by reduction with sodium hydrosulphite in the usual way. After thermo-fixation (180°C, 30 min), a brownish pink dyeing is obtained with very good all-round fastness, especially fastness to light and sublimation, in particular excellent wet fastness.

The dyed swatches were exposed to light by the fakra standard test. FAKRA is a test according to ISO 105B02: Exposure in Xenotest 450 equipped with a Xenon arc source; black standard temperature 45 °C, relative humidity 45 ± 5 %. The number of cycles is indicated in tables as times this cycle: 2 cycles fakra means two cycles of this Fakra test; in DIN 75202/H: one cycle FAKRA is 54 hours exposure.

Afterwards the adjacent fabrics are assessed by the Grey Scale Change ISO A03.

This 5-step Grey Scale consists of 5 pairs of swatches of grey and white cloth which illustrate the perceived color differences corresponding to fastness ratings 5, 4-5, 4, etc. The fastness rating is that number of the Grey Scale which has a perceived color difference equal in magnitude to the perceived color difference between the original adjacent fabric and the treated adjacent fabric. An improvement of a value by 1 signifies an improvement of 20%

The results are summarized in table 1, table 2, table 3 and table 4.

In tables the amount of the dyes is given in percent of the polyester fiber material dyed in the respective dying bath. The ratio of the different components is also given as percentage of the total amount of dyestuff used in the dying bath. Eventually an additional UV Absorber is applied, for example a UV-absorber of formula A-8 used in weight-% of dyed PES fiber material. The amount of the UV absorber is given in percent of the weight of the fabric treated. The results of the fakra test is given as explained above

**Table 1**

| **Dye** | **23a** | **24a** | **25a** | **26a** | **27a** | **28a** |
|---|---|---|---|---|---|---|
| C.I. Solvent Yellow 163 | 0 | 0 | 9 | 0 | 0 | 33 |
| C.I. Solvent Brown 53 | 96 | 96 | 90.9 | 83 | 83 | 67 |
| C.I. Disperse Red 86 | 4 | 0 | 0 | 17 | 0.0 | 0 |
| C.I. Disperse Blue 77 | 0 | 4 | 0 | 0 | 17 | 0 |
| UV-absorber of formula A-8 used in weight-% of dyed PES fiber material | 2 | 2 | 2 | 2 | 2 | 2 |
| 2 cycles Fakra | 4.5 | 4.6 | 4.7 | 4.8 | 4.9 | 4.9 |
| 4 cycles Fakra | 4.3 | 4.3 | 4.5 | 4.6 | 4.7 | 4.7 |
| 6 cycles Fakra | 4.1 | 4.2 | 4.5 | 4.5 | 4.6 | 4.6 |
| 8 cycles Fakra | 4.0 | 4.1 | 4.3 | 4.4 | 4.5 | 4.7 |
| 10 cycles Fakra | 3.7 | 3.9 | 4.2 | 4.1 | 4.3 | 4.6 |
| dystuff used in weight-% of dyed PES fiber material | 0.520 | 0.520 | 0.550 | 0.120 | 0.120 | 0.150 |

**Table 2**

| **Dye** | **29a** | **30a** | **31a** | **32a** | **33a** | **34a** |
|---|---|---|---|---|---|---|
| C.I. Solvent Yellow 163 | 0 | 0 | 9 | 0 | 0 | 33 |
| C.I. Pigment Orange 70 | 96 | 96 | 91 | 83 | 83 | 67 |
| C.I. Disperse Red 86 | 4 | 0 | 0 | 17 | 0 | 0 |
| C.I. Disperse Blue 77 | 0 | 4 | 0 | 0 | 17 | 0 |
| UV-absorber of formula A-8 used in weight-% of dyed PES fiber material | 2 | 2 | 2 | 2 | 2 | 2 |
| 2 cycles Fakra | 4.4 | 4.5 | 4.6 | 4.8 | 4.8 | 4.8 |
| 4 cycles Fakra | 4.1 | 4.2 | 4.3 | 4.4 | 4.6 | 4.7 |
| 6 cycles Fakra | 3.8 | 3.9 | 4.1 | 4.2 | 4.3 | 4.5 |
| 8 cycles Fakra | 3.6 | 3.8 | 4.1 | 4.0 | 4.3 | 4.4 |
| 10 cycles Fakra | 3.4 | 3.6 | 3.8 | 3.8 | 4.2 | 4.2 |
| dystuff used in weight-% of dyed PES fiber material | 0.401 | 0.409 | 0.403 | 0.108 | 0.485 | 0.496 |

**Table 3 (The examples 1a, 2a are 1b are comparative examples.) In table 3 green shades are realized and example 1a (comparative) has the same shade as example 3a**

| **dye** | **1a** | **2a** | **3a** |
|---|---|---|---|
| C.I. Disperse Yellow 42 | 57 | 0 | 0 |
| C.I. Solvent Yellow 163 | 0 | 45 | 22 |
| Mixture of C.I. Disperse Red 86 and C.I. Solvent Red 135 | 0 | 24 | 12 |
| C.I. Disperse Red 86 | 21 | 0 | 0 |
| C.I. Solvent Brown 53 | 0 | 0 | 47 |
| C.I. Disperse Blue 77 | 15 | 31 | 0 |
| C.I. Disperse Blue 60 | 7 | 0 | 18 |
| UV-absorber of formula A-8 used in weight-% of dyed PES fiber material | 2 | 2 | 2 |
| 7 cycles Fakra | 2.7 | 2.5 | 3.5 |
| dystuff used in weight-% of dyed PES fiber material | 0.666 | 0.510 | 0.403 |

**Table 4 (The examples 2b, 4b, and 5b are comparative examples) In table 4 dark green shades are realized. The examples 1a, 2a, 1b, 2b, 4b, and 5b are comparative examples.**

| **dye** | **1b** | **2b** | **3b** | **4b** | **5b** |
|---|---|---|---|---|---|
| C.I. Disperse Yellow 42 | 49 | 0 | 0 | 44 | 0 |
| C.I. Solvent Yellow 163 | 0 | 33 | 0 | 0 | 30 |
| Mixture of C.I. Disperse Red 86 and C.I. Solvent Red 135 | 0 | 24 | 2 | 0 | 24 |
| C.I. Disperse Red 86 | 25 | 0 | 0 | 25 | 0 |
| C.I. Solvent Brown 53 | 0 | 0 | 13 | 0 | 0 |
| C.I. Pigment Orange 70 | 0 | 0 | 53 | 0 | 0 |
| C.I. Disperse Blue 77 | 27 | 43 | 31 | 31 | 45 |
| C.I. Disperse Blue 60 | 8 | 0 | 0 | 9 | 0 |
| UV-absorber of formula A-8 used in weight-% of dyed PES fiber material | 2 | 2 | 2 | 2 | 2 |
| 7 cycles Fakra | 2.3 | 2.7 | 3.5 | 2.7 | 2.5 |
| dystuff used in weight-% of dyed PES fiber material | 1.230 | 0.880 | 1.051 | 1.280 | 0.990 |

## Claims

1. Use of at least one transition metal coordination compound according to formula (I) 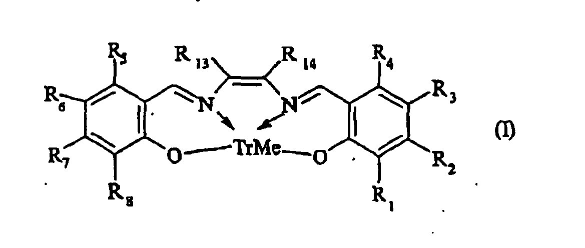 wherein TrMe signifies a transition metal and R₁ to R₈ independently from each other signify H, halogen, -NO₂, -CN, -OH, -COOH, -CH₃, -NH₂ or NHCH₃ and R₁₃ or R₁₄ independently from each other signify H, halogen or -CN, or R₁₃ aud R₁₄ form together a ring which is by preference a six membered ring and which may be unsubstituted or may be substituted by halogen,-NO₂, -CN, -OH, -COOH,- CH₃, -NH₂ or NHCH₃ for improving the light fastness of dyed polyester material.

2. Use according to claim 1 **characterized in that** the transition metal coordination compound comprises Ni, Co, Cr or Cu (Nickel, Cobalt, Chromium or Copper).

3. Use according to claim 1 **characterized in that** the transition metal in the transition metal coordination compound of formula (I) is Nickel.

4. Use according to any of the claims 1 to 3 **characterized in that** the transition metal coordination compound is used in a mixture comprising at least one of the following dyes: C.I. Disperse Yellow 42, C.L Disperse Yellow 72, C.I. Disperse Yellow 86, C.L Disperse Yellow 54, C.L Disperse Yellow 64, C.I. Solvent Yellow 163, C.L Disperse Red 60, C.L Disperse Red 86, C.I. Disperse Red 91, C.I. Disperse Red 167, C.I. Disperse Red 167.1, C.I. Disperse Red 202, C.L Disperse Red 302, C.L Disperse Red 273, C.L Disperse Red 279, C.I. Disperse Red 271, C.I. Solvent Red 135, C.L Disperse Violet 27, C.I. Disperse Violet 57, C.L Disperse Blue 56, C.L Disperse Blue 77, C.L Disperse Blue 54, C.L Disperse Blue 27, C.I. Disperse Blue 55, C.L Disperse Blue 60, C.L Disperse Blue 87, C.I. Disperse Orange 30, C.I. Disperse Orange 41, C.L Disperse Orange 29, structures according to formula (IV) 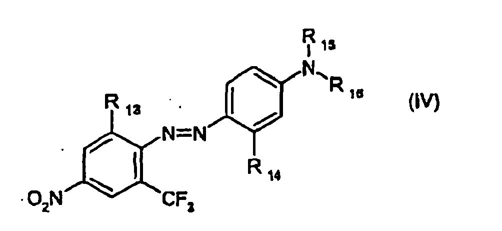 wherein
R₁₃ dignifies -Br, -Cl, or -CN;
R₁₄ sigifies -H, -CH₃, -NHCOCH₃;
R₁₅ signifies a unsubstituted ethyl group or ethyl group which is substituded by-CN, -acyloxy;
R₁₆ signifies a unsubstituted ethyl group or ethyl group which is substiluded by-CN, -acyloxy,
or mixtures thereof.

5. Mixture comprising at least one transition metal coordination compound according to formula (I) 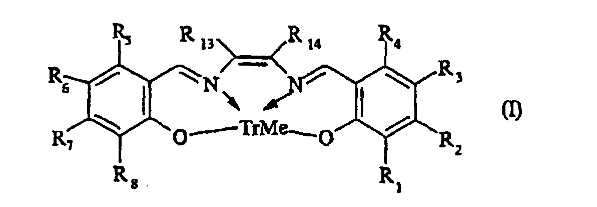 wherein TrMe signifies a transition metal and R₁ to R₈ independently from each other signify H, halogen, -NO₂, -CN, -OH, -COOH, -CH₃, -NH₂ or NHCH₃ and R₁₃ or R₁₄ independently from each other signify H, halogen or -CN, or R₁₃ and R₁₀ form together a ring which is by preference a six membered ring and which may be unsubstituted or may be substituted by halogen,-NO₂, -CN, -OH, -COCH, - CH₃, -NH₂ or NHCH₃. and at least one disperse dye **characterized in that** the at least one disperse dye is at least one of the following dyes: C.L Disperse Yellow 42, C.I. Disperse Yellow 72, C.I. Disperse Yellow 86, C.I. Disperse Yellow 54, C.I. Disperse Yellow 64, C.L Solvent Yellow 163, C.I Disperse Red 60, C.I. Disperse Red. 86, C.L Disperse Red 91, C.I. Disperse Red 167, C.I. Disperse Red 167.1, C.I. Disperse Red 202, C.I. Disperse Red 302, C.I. Disperse Red 273, C.L Disperse Red 279, C.I. Disperse Red 271, C.L Solvent Red 135, C.I. Disperse Violet 27, C.L Disperse Violet 57, C.I. Disperse Blue 56, C.I. Disperse Blue 77, C.L Disperse Blue 54, C.I. Disperse Blue 27, C.L Disperse Blue 55, C.L Disperse Blue 60, C.I. Disperse Blue 87, C.L Disperse Orange 30, C.I. Disperse Orange 41, C.L Disperse Orange 29, structures according to formula (IV) 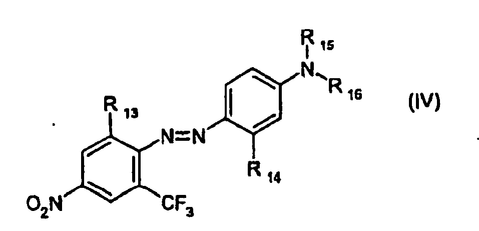 wherein
R₁₃ signifies -Br, -Cl, or -CN;
R₁₄ signifies -H, -CH₃, -NHCOCH₃;
R₁₅ signifies a unsubstituted ethyl group or ethyl group which is substituded by -CN, -acyloxy,
R₁₆ signifies a unsubstituted ethyl group or ethyl group which is substituded by -CN, -acyloxy,
or mixtures thereof

6. Mixture according to claim 5 **characterized in that** the transition metal TrMe comprises Ni, Co, Cr or Cu (Nickel, Cobalt, Chromium or Copper).

7. Mixture according to claim 6 **characterized in that** the transition metal TrMe is Nickel.

## Patentansprüche

1. Verwendung mindestens einer Übergangsmetallkoordinationsverbindung der Formel (I) 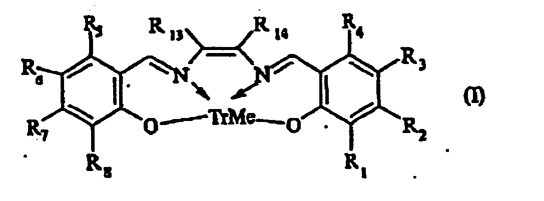 worin
TrMe für ein Übergangsmetall steht und R₁ bis R₈ unabhängig voneinander für H, Halogen, -NO₂, -CN, -OH, -COOH, -CH₃, -NH₂ oder NHCH₃ stehen und R₁₃ oder R₁₄ unabhängig voneinander für H, Halogen oder -CN stehen oder R₁₃ und R₁₄ zusammen einen Ring bilden, der vorzugsweise sechsgliedrig ist und unsubstituiert oder durch Halogen, -NO₂, -CN, -OH, -COOH, -CH₃, -NH₂ oder NHCH₃ substituiert sein kann,
zur Verbesserung der Lichtechtheit von gefärbtem Polyestermaterial.

2. Verwendung nach Anspruch 1, **dadurch gekennzeichnet, daß** die Übergangsmetallkoordinationsverbindung Ni, Co, Cr oder Cu (Nickel, Cobalt, Chrom oder Kupfer) umfaßt.

3. Verwendung nach Anspruch 1, **dadurch gekennzeichnet, daß** es sich bei dem Übergangsmetall in der Übergangsmetallkoordinationsverbindung der Formel (I) um Nickel handelt.

4. Verwendung nach einem der Ansprüche 1 bis 3, **dadurch gekennzeichnet, daß** die Übergangsmetallkoordinationsverbindung in einer Mischung verwendet wird, die mindestens einen der folgenden Farbstoffe umfaßt: C.I. Disperse Yellow 42, C.I. Disperse Yellow 72, C.I. Disperse Yellow 86, C.I. Disperse Yellow 54, C.I. Disperse Yellow 64, C.I. Solvent Yellow 163, C.I. Disperse Red 60, C.I. Disperse Red 86, C.I. Disperse Red 91, C.I. Disperse Red 167, C.I. Disperse Red 167.1, C.I. Disperse Red 202, C.I. Disperse Red 302, C.I. Disperse Red 273, C.I. Disperse Red 279, C.I. Disperse Red 271, C.I. Solvent Red 135, C.I. Disperse Violet 27, C.I. Disperse Violet 57, C.I. Disperse Blue 56, C.I. Disperse Blue 77, C.I. Disperse Blue 54, C.I. Disperse Blue 27, C.I. Disperse Blue 55, C.I. Disperse Blue 60, C.I. Disperse Blue 87, C.I. Disperse Orange 30, C.I. Disperse Orange 41, C.I. Disperse Orange 29, Strukturen der Formel (IV) 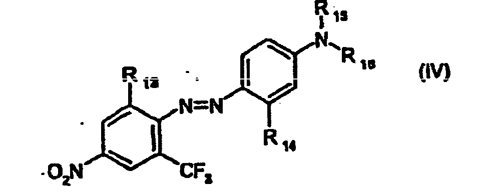 worin
R₁₃ für -Br, -Cl oder -CN steht;
R₁₄ für -H, -CH₃ oder -NHCOCH₃ steht;
R₁₅ für eine unsubstituierte Ethylgruppe oder eine durch -CN oder -Acyloxy substituierte Ethyl- gruppe steht;
R₁₆ für eine unsubstituierte Ethylgruppe oder eine durch -CN oder -Acyloxy substituierte Ethyl- gruppe steht;
oder Mischungen davon.

5. Mischung, umfassend mindestens eine Übergangsmetallkoordinationsverbindung der Formel (I) 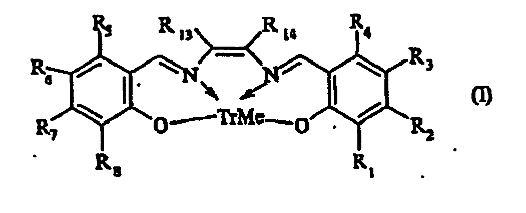 worin
TrMe für ein Übergangsmetall steht und R₁ bis R₈ unabhängig voneinander für H, Halogen, -NO₂, -CN, -OH, -COOH, -CH₃, -NH₂ oder NHCH₃ stehen und R₁₃ oder R₁₄ unabhängig voneinander für H, Halogen oder -CN stehen oder R₁₃ und R₁₄ zusammen einen Ring bilden, der vorzugsweise sechsgliedrig ist und unsubstituiert oder durch Halogen, -NO₂, -CN, -OH, -COOH, -CH₃, -NH₂ oder NHCH₃ substituiert sein kann,
und mindestens einen Dispersionsfarbstoff, **dadurch gekennzeichnet, daß** es sich bei dem mindestens einen Dispersionsfarbstoff um mindestens einen der folgenden Farbstoffe handelt: C.I. Disperse Yellow 42, C.I. Disperse Yellow 72, C.I. Disperse Yellow 86, C.I. Disperse Yellow 54, C.I. Disperse Yellow 64, C.I. Solvent Yellow 163, C.I. Disperse Red 60, C.I. Disperse Red 86, C.I. Disperse Red 91, C.I. Disperse Red 167, C.I. Disperse Red 167.1, C.I. Disperse Red 202, C.I. Disperse Red 302, C.I. Disperse Red 273, C.I. Disperse Red 279, C.I. Disperse Red 271, C.I. Solvent Red 135, C.I. Disperse Violet 27, C.I. Disperse Violet 57, C.I. Disperse Blue 56, C.I. Disperse Blue 77, C.I. Disperse Blue 54, C.I. Disperse Blue 27, C.I. Disperse Blue 55, C.I. Disperse Blue 60, C.I. Disperse Blue 87, C.I. Disperse Orange 30, C.I. Disperse Orange 41, C.I. Disperse Orange 29, Strukturen der Formel (IV) 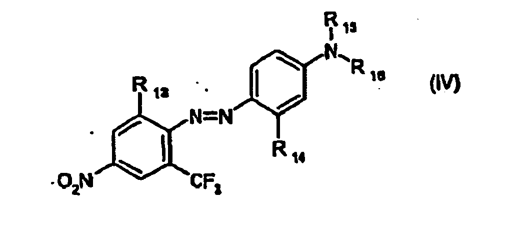 worin
R₁₃ für -Br, -Cl oder -CN steht;
R₁₄ für -H, -CH₃ oder -NHCOCH₃ steht;
R₁₅ für eine unsubstituierte Ethylgruppe oder eine durch -CN oder -Acyloxy substituierte Ethyl- gruppe steht;
R₁₆ für eine unsubstituierte Ethylgruppe oder eine durch -CN oder -Acyloxy substituierte Ethyl- gruppe steht;
oder Mischungen davon.

6. Mischung nach Anspruch 5, **dadurch gekennzeichnet, daß** das Übergangsmetall TrMe Ni, Co, Cr oder Cu (Nickel, Cobalt, Chrom oder Kupfer) umfaßt.

7. Mischung nach Anspruch 6, **dadurch gekennzeichnet, daß** es sich bei dem Übergangsmetall TrMe um Nickel handelt.

## Revendications

1. Utilisation d'au moins un composé de coordination d'un métal de transition de formule (I) 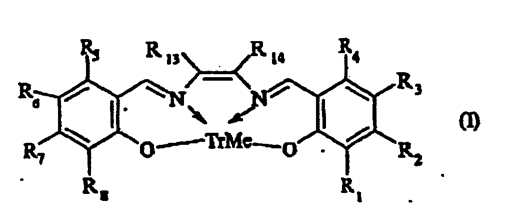 dans laquelle
TrMe signifie un métal de transition et R₁ à R₈ signifient indépendamment les uns des autres H, un halogène, -NO₂, -CN, -OH, -COOH, -CH₃, -NH₂ ou NHCH₃ et R₁₃ ou R₁₄ signifient indépendamment l'un de l'autre H, un halogène ou -CN, ou R₁₃ et R₁₄ forment ensemble un cycle qui est de préférence un cycle à six éléments et qui peut être non substitué ou substitué par un halogène, -NO₂, -CN, -OH, -COOH, -CH₃, -NH₂ ou NHCH₃,
pour améliorer la résistance à la lumière d'un matériau polyester coloré.

2. Utilisation selon la revendication 1, **caractérisée en ce que** le composé de coordination d'un métal de transition comprend Ni, Co, Cr ou Cu (nickel, cobalt, chrome ou cuivre).

3. Utilisation selon la revendication 1, **caractérisée en ce que** le métal de transition dans le composé de coordination d'un métal de transition de formule (I) est le nickel.

4. Utilisation selon l'une quelconque des revendications 1 à 3, **caractérisée en ce que** le composé de coordination d'un métal de transition est utilisé dans un mélange comprenant au moins un des colorants suivants : C.I. Disperse Yellow 42, C.I. Disperse Yellow 72, C.I. Disperse Yellow 86, C.I. Disperse Yellow 54, C.I. Disperse Yellow 64, C.I. Solvent Yellow 163, C.I. Disperse Red 60, C.I. Disperse Red 86, C.I. Disperse Red 91, C.I. Disperse Red 167, C.I. Disperse Red 167.1, C.I. Disperse Red 202, C.I. Disperse Red 302, C.I. Disperse Red 273, C.I. Disperse Red 279, C.I. Disperse Red 271, C.I. Solvent Red 135, C.I. Disperse Violet 27, C.I. Disperse Violet 57, C.I. Disperse Blue 56, C.I. Disperse Blue 77, C.I. Disperse Blue 54, C.I. Disperse Blue 27, C.I. Disperse Blue 55, C.I. Disperse Blue 60, C.I. Disperse Blue 87, C.I. Disperse Orange 30, C.I. Disperse Orange 41, C.I. Disperse Orange 29, structures de formule (IV) 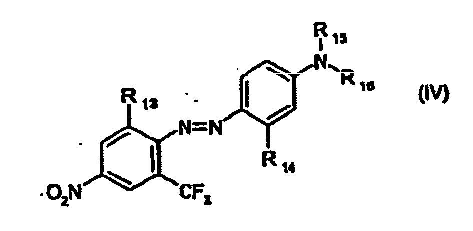 dans laquelle
R₁₃ signifie -Br, -Cl ou -CN ;
R₁₄ signifie -H, -CH₃, -NHCOCH₃ ;
R₁₅ signifie un groupe éthyle non substitué ou un groupe éthyle qui est substitué par -CN, -acyloxy ;
R₁₆ signifie un groupe éthyle non substitué ou un groupe éthyle qui est substitué par -CN, -acyloxy ;
ou leurs mélanges.

5. Mélange comprenant au moins un composé de coordination d'un métal de transition de formule (I) 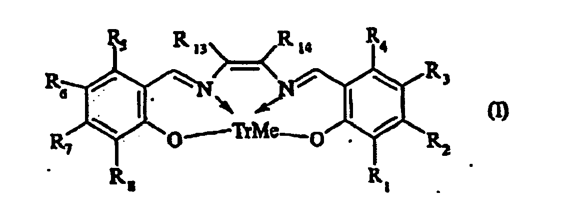 dans laquelle
TrMe signifie un métal de transition et R₁ à R₈ signifient indépendamment les uns des autres H, un halogène, -NO₂, -CN, -OH, -COOH, -CH₃, -NH₂ ou NHCH₃ et R₁₃ ou R₁₄ signifient indépendamment l'un de l'autre H, un halogène ou -CN, ou R₁₃ et R₁₄ forment ensemble un cycle qui est de préférence un cycle à six éléments et qui peut être non substitué ou substitué par un halogène, -NO₂, -CN, -OH, -COOH, -CH₃, -NH₂ ou NHCH₃, et au moins un colorant dispersé, **caractérisé en ce que** le ou les colorants dispersés sont au moins un des colorants suivants : C.I. Disperse Yellow 42, C.I. Disperse Yellow 72, C.I. Disperse Yellow 86, C.I. Disperse Yellow 54, C.I. Disperse Yellow 64, C.I. Solvent Yellow 163, C.I. Disperse Red 60, C.I. Disperse Red 86, C.I. Disperse Red 91, C.I. Disperse Red 167, C.I. Disperse Red 167.1, C.I. Disperse Red 202, C.I. Disperse Red 302, C.I. Disperse Red 273, C.I. Disperse Red 279, C.I. Disperse Red 271, C.I. Solvent Red 135, C.I. Disperse Violet 27, C.I. Disperse Violet 57, C.I. Disperse Blue 56, C.I. Disperse Blue 77, C.I. Disperse Blue 54, C.I. Disperse Blue 27, C.I. Disperse Blue 55, C.I. Disperse Blue 60, C.I. Disperse Blue 87, C.I. Disperse Orange 30, C.I. Disperse Orange 41, C.I. Disperse Orange 29, structures de formule (IV) 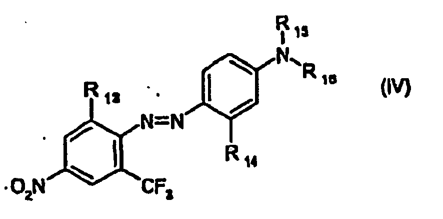 dans laquelle
R₁₃ signifie -Br, -Cl ou -CN ;
R₁₄ signifie -H, -CH₃, -NHCOCH₃ ;
R₁₅ signifie un groupe éthyle non substitué ou un groupe éthyle qui est substitué par -CN, -acyloxy ;
R₁₆ signifie un groupe éthyle non substitué ou un groupe éthyle qui est substitué par -CN, -acyloxy ;
ou leurs mélanges.

6. Mélange selon la revendication 5, **caractérisé en ce que** le métal de transition TrMe comprend Ni, Co, Cr ou Cu (nickel, cobalt, chrome ou cuivre).

7. Mélange selon la revendication 6, **caractérisé en ce que** le métal de transition TrMe est le nickel.
